# EUROPÄISCHE PATENTSCHRIFT

(11) **EP 0 461 634 B1**
(45) Veröffentlichungstag und Bekanntmachung des Hinweises auf die Patenterteilung: **25.10.1995**
(21) Anmeldenummer: 91109631.1
(22) Anmeldetag: 12.06.1991
(51) Int. Cl.: H01J 9/395, H01J 9/44

(54) **Verfahren zur Herstellung einer Gasentladungslichtquelle und Gasentladungsröhre**
Method of manufacture of a gas discharge light source and gas discharge tube
Procédé de fabrication d'une source lumineuse à décharge dans un gaz et tube de décharge gazeuse

(30) Priorität: 12.06.1990 DE 4018792
(43) Veröffentlichungstag der Anmeldung: 18.12.1991
(73) Patentinhaber: VECTOR RELATED PHYSICS (CONSULTANTS) LTD., Jersey, Channel Islands (GB)
(72) Erfinder: Fuchs, Herbert Karl, Seyrlstrasse 2, A-4863 Seewalchen/atters (AT)
(74) Vertreter: Marx, Lothar, Dr.

(56) Entgegenhaltungen:
- DE-B- 1 240 990
- US-A- 2 892 665
- US-A- 3 005 674
- US-A- 3 957 328
- US-A- 4 859 903
- PATENT ABSTRACTS OF JAPAN vol. 6, no. 60 (E-102)(938) 17. April 1982 & JP-A-57 003 345

## Beschreibung

Die Erfindung betrifft ein Verfahren zur Herstellung einer Gasentladungslichtquelle zur Abgabe einer elektromagnetischen Strahlung mit einer Gasentladungsröhre, die mit zumindest einem Entladungsgasmaterial gefüllt ist, und mit einer Einrichtung zur Erzeugung einer Gasentladung. Ein derartiges Verfahren ist beispielsweise aus der US-PS 2 755 159 bekannt. Um die geeignete Betriebsspannung der Gasentladungslichtquelle sicherzustellen, unabhängig von der Menge eingefüllten Entladungsgasmaterials (Quecksilber) und von Variationen der Abmessungen, die beide beträchtlich die Betriebsspannung beeinflussen, wird ein Überschuß an Quecksilber eingefüllt und dann der Überschuß wieder ausgetrieben. Eine Spannungsquelle wird an die Gasentladungslichtquelle angeschlossen und die gefüllte Gasentladungsröhre gezündet. Die an den Elektroden der Gasentladungsröhre anliegende Spannung wird überwacht, die Spannung steigt allmählich, bis das gesamte Quecksilber verdampft ist, und beginnt dann wieder zu sinken, wenn Dampf von dem überhitzten Hauptabschnitt der Gasentladungsröhre zu einem kälteren Seitenarm gelangt und dort kondensiert. Sobald die Spannung auf einen gewünschten Wert gefallen ist, wird die Spannungsquelle abgeschaltet, und der als Reservoir für überschüssiges Entladungsmaterial dienende Seitenarm wird abgeschmolzen. Durch die beschriebenen Maßnahmen soll erreicht werden, daß - unabhängig von den genannten Variationen - die Betriebsspannung auf 1 bis 2 Volt festgelegt ist.

In der US-PS 3 309 565 wird eine Fluoreszenzlampe vorgeschlagen, bei welcher im Betrieb eine Temperaturstabilisierung eines Vorrats an kondensiertem Quecksilber (ein sog. "Cold Spot") erfolgt. Hierzu wird mit Hilfe eines Peltier-Elements der "Cold Spot" gekühlt und so der Dampfdruck des Entladungsgasmaterials (Quecksilber) auf einem Wert gehalten, der im Betrieb eine optimale Lichtabgabe der Gasentladungslichtquelle ermöglicht.

In der US-PS 4 431 947 wird eine geregelte Lichtquelle beschrieben, die im Betrieb einen Lichtfluß konstanter Intensität bei einer gewünschten Wellenlänge dadurch zur Verfügung stellt, daß ein rückgekoppeltes Regelsystem eingesetzt wird, welches die Intensität einer Licht erzeugenden Lampe auf einem vorbestimmten Wert hält. Eine derartige Lichtquelle konstanter Intensität wird für Spezialzwecke eingesetzt, beispielsweise bei mit kernmagnetischer Resonanz arbeitenden Instrumenten wie beispielsweise einem magnetischen Resonanzkreisel. Um die gewünschte Konstanz des Lichtes bei der gewünschten Wellenlänge zu erreichen, wird eine andere Wellenlänge überwacht und hiervon ein Regelsignal abgeleitet, welches letztlich die Temperatur eines "kalten Endes" der Lichtquelle steuert.

In der DE-PS 22 12 536 wird ein Verfahren zur Herstellung von Leuchtstofflampen vorgeschlagen, mit welchem erreicht werden soll, daß der Lampenkolben unbeeinflußt von Verunreinigungen bleibt, die bei der Aktivierung der Lampenkathoden freiwerden. Zu diesem Zweck werden die Kathoden außerhalb der Kammer aktiviert, in welcher der Lampenkolben gefüllt wird, die Verunreinigungen werden entfernt, und dann werden Endkappen mit den Kathoden in die Enden des Lampenkolbens eingedichtet.

Die DE-OS 3 36 088 beschreibt ein Herstellungsverfahren für Gasentladungslampen, bei welchem zum Entfernen von Verunreinigungen aus dem Kolbeninneren die Lampe gezündet und/oder aufgeheizt wird, wobei durch den Kolben ein kontinuierlicher Strom eines inerten zündfähigen Gases geleitet wird während der Entladung und/oder der Beheizung. Als Spülgas kann beispielsweise Argon oder ein anderes Edelgas dienen.

Im Stand der Technik hat es nicht an weiteren Versuchen gefehlt, wesentliche Parameter derartiger Gasentladungslichtquellen zu verbessern, beispielsweise die Intensität der ausgesandten elektromagnetischen Strahlung, die Stabilität u.dgl.

So wurde bereits in der US-PS 4 157 485 eine Niederdruck-Quecksilberdampflampe vorgeschlagen, bei welcher angestrebt ist, die Quecksilberdampflampe mit maximalem Wirkungsgrad zu betreiben. Hierzu wird es als erforderlich angesehen, den optimalen Quecksilber-Partialdruck von 6 x 10⁻³ Torr, der einer Temperatur des Quecksilbers von etwa 40 °C entspricht, möglichst konstant zu halten. Steigt nämlich die Lampentemperatur über die Umgebungstemperatur, bei der das Quecksilber in der Entladung eine Temperatur von etwa 40 °C aufweisen würde, so sinkt der Wirkungsgrad, und daher schwankt mit schwankender Umgebungstemperatur die Lampenleistung. Wird die der Lampe zugeführte elektrische Leistung erhöht, so steigt die Temperatur, was wiederum zu einer Verringerung des Konversionswirkungsgrades führt, also der Umsetzung der zugeführten elektrischen Leistung in elektromagnetische Strahlungsleistung. Damit der Quecksilber-Partialdruck über einen weiteren Temperaturbereich um den Wert von 6 x 10⁻³ Torr herum stabil ist, wird die Verwendung eines Amalgams aus Wismut, Indium und Quecksilber mit einer bestimmten Zusammensetzung vorgeschlagen. Dies soll gegenüber bereits bekannten Amalgam-Zusammensetzungen vorteilhaft sein, da bei den bekannten Amalgam-Zusammensetzungen der Quecksilberanteil im Amalgam im Betrieb sinkt, da ein Teil des Quecksilbers gebunden wird, insbesondere durch Absorption in einer fluoreszenzschicht.

Eine weitere Verbesserung der in der US-PS 4 157 485 beschriebenen Niederdruck-Quecksilberdampflampe wurde in der EP-A1-0 157 440 vorgeschlagen. Insbesondere bei einem höheren Entladungsstrom und bei einem Lampenrohr mit geringem Durchmesser ist nämlich der Stabilisierungswert des Quecksilberdampfdrucks bei dem in der amerikanischen Patentschrift vorgeschlagenen Amalgam zu gering, um einen optimalen Wirkungsgrad und eine maximale Lichtausgangsleistung zu erzielen. Bei Temperaturen im Bereich von 100-120 °C im Bereich des Amalgams fällt nämlich der Quecksilberdruck unter 6 x 10⁻³ Torr. Daher wird in der EP-A1-0 157 440 eine ein Amalgam bildende Legierung vorgeschlagen, welche aus Wismut, Blei und Silber besteht. Hierdurch soll sich eine optimale Lichtausgangsleistung bei einer Temperatur von 70-150 °C im Bereich des Amalgams ergeben. Die Legierung aus Wismut, Blei und Silber ist hierzu an einem sogenannten "cold spot" der Quecksilberdampflampe vorgesehen, an welchem eine Kondensation stattfindet.

In der US-PS 3 878 421 wird eine Hochleistungslampe für Ultraviolettstrahlung vorgeschlagen, welche eine spezielle Elektrodenanordnung aufweist. Das Lampenrohr hat hierbei einen relativ großen Durchmesser und ist mit verengten Endabschnitten versehen. Hier bilden sich kalte Stellen, also "cold spots", um eine teilweise Kondensation des Quecksilberdampfs zu erreichen und so zu verhindern, daß ein zu hoher Dampfdruck des Quecksilbers auftritt, der den Lampenwirkungsgrad verringern würde. Die Länge der Endabschnitte ist größer oder gleich dem doppelten Durchmesser der Endabschnitte.

In der US-PS 4 005 332 ist eine Quecksilberfluoreszenzlampe beschrieben, die mit Gleichstrom betrieben wird. Während bei einem Wechselstrombetrieb sich ein optimaler Wirkungsgrad bei einem Quecksilber-Partialdruck von 7 x 10⁻³ Torr entsprechend einer Temperatur von 40 °C am "cold spot" des Quecksilbers ergibt, wobei die exakten Werte u.a. auch vom Lampenrohrradius abhängen, ist offenbar bei Gleichstrombetrieb die optimale Temperatur anders. Diese optimale Temperatur hängt von der Polung beim Gleichstrombetrieb ab und liegt bei einem "cold spot" am Anodenende der Gasentladungsröhre unterhalb von 40 °C, wobei die optimale Temperatur mit steigendem Lampenstrom sinkt, wogegen bei einer Anordnung des "cold spot" am Kathodenende die optimale Temperatur größer als 40 °C ist und mit steigendem Lampenstrom steigt. Daher wird in der US-PS 4 005 332 vorgeschlagen, den "cold spot" in einem Wasserbad anzuordnen, dessen Temperatur variiert werden kann. Hierbei befindet sich im Betrieb in der Fluoreszenzlampe immer soviel Quecksilber, daß immer ein bestimmter Anteil des Quecksilbers flüssig ist.

In der US-PS 4 349 765 wird eine Quecksilberdampflampe für ultraviolette Strahlung hoher Intensität vorgeschlagen, bei welcher Quecksilber und Edelgas vorgesehen sind und die Entladung bei einem Druck von 5 x 10⁻³ bis 5 x 10⁻¹ Torr Quecksilber bzw. 5 x 10⁻² Torr Edelgas erfolgt. Die Gasentladungsröhre besteht aus einem Quarzglas, welches so dotiert ist, daß die Linien mit 185 nm und 194 nm der emittierten Strahlung absorbiert werden, wogegen die Linie mit 254 nm praktisch unabgeschwächt hindurchtritt. Zur Einstellung des optimalen Dampfdrucks des Quecksilbers ist wiederum ein "cold spot" vorgesehen, also eine Stelle, an der das Quecksilber in kondensierter, also flüssiger Form vorliegt, und die Temperatur des "cold spot" kann zwischen 48 und 65 °C eingestellt werden. Durch diese Dampfdruckeinstellung läßt sich eine Intensitätseinstellung erreichen.

Eine Verbesserung dieser Ultraviolett-Gasentladungslampe wird in der US-PS 4 835 442 vorgeschlagen. Um Schwankungen der wesentlichen Parameter der Gasentladungslampe zu vermeiden, wird ein Reservoir vorgeschlagen, das als "cold spot" dient und dessen Temperatur eingestellt werden kann. Das Reservoir ist gegenüber der Umgebung temperaturisoliert, um die genannten Schwankungen auszuschalten.

Eine ähnliche Ultraviolett-Gasentladungslampe, wie sie in der US-PS 4 349 765 beschrieben wird, geht auch aus der GB-PS 2 009 493 hervor.

In der CH-PS 570 040 ist eine Quecksilberdampflampe als Ultraviolettstrahlungsquelle beschrieben, bei welcher die Gasentladungsröhre einen Druckausgleichsraum aufweist, der den Kathodenraum mit dem Anodenraum verbindet. Hierbei soll die Summe der Volumina des Kathodenraums, des Anodenraums und des Druckausgleichsraums größer sein als das Volumen des Entladungsraums. Durch ein Regelglied wird der Quecksilber-Partialdruck so geregelt, daß die Strahlungsausbeute im Bereich von 254 nm mindestens 80 % des Ausbeutemaximums beträgt. Auch bei dieser Quecksilberdampflampe ist ein sogenannter "cold spot" vorgesehen, an welchem sich ein Tropfen aus kondensiertem, also flüssigem Quecksilber befindet.

Nach dem voranstehend beschriebenen Stand der Technik wurde daher die angestrebte Verbesserung der Eigenschaften von Gasentladungslichtquellen durch bestimmte Maßnahmen erreicht, die den Betrieb dieser Gasentladungslichtquellen festlegen, also die eigentlichen Betriebsbedingungen.

Der vorliegenden Erfindung liegt die Aufgabe zugrunde, die Leistung von Gasentladungslichtquellen weiter zu erhöhen.

Die der Erfindung zugrundeliegende Erkenntnis besteht darin, nicht die eigentlichen Betriebsbedingungen zu ändern, sondern durch bestimmte Verfahrensschritte bei der Herstellung einer Gasentladungslichtquelle, also vor dem eigentlichen Betrieb, eine Optimierung der sich dann später im Betrieb einstellenden Betriebsbedingungen vorzunehmen.

Gemäß der vorliegenden Erfindung wird die Aufgabe gelöst durch das im Patentanspruch 1 angegebene Verfahren zur Herstellung einer Gasentladungslichtquelle zur Abgabe einer elektromagnetischen Strahlung mit einer Gasentladungsröhre, die mit zumindest einem Entladungsgasmaterial gefüllt ist, und mit einer Einrichtung zur Erzeugung einer Gasentladung, bei welchem folgende Schritte vorgesehen sind: Zünden der mit dem Entladungsgasmaterial gefüllten Gasentladungsröhre und Durchführung eines speziellen Formierungsvorgangs. Bei diesem Formierungsvorgang ist die elektrische Betriebsleistung der Gasentladungslichtquelle mindestens so hoch wie die angestrebte Dauerbetriebsleistung, die Gasentladungsröhre wird auf einer Temperatur gehalten, die mindestens so hoch ist wie die spätere Betriebstemperatur, die Intensität der emittierten elektromagnetischen Strahlung wird überwacht und der Partialdruck des verdampften Entladungsgasmaterials wird variiert, bis die Intensität der jeweils gewünschten elektromagnetischen Strahlung einen Maximalwert erreicht hat. Wenn dann durch Erreichen des Maximalwerts ein optimaler Zustand erreicht ist, wird ein Reservoir mit überschüssigem Entladungsgasmaterial auf solche Weise schnell von der Gasentladungsröhre abgetrennt, daß die Gasentladungsröhre unter Betriebsbedingungen kein kondensiertes Entladungsgas enthält.

Eine weitere Lösung wird gemäß der Erfindung durch die im Patentanspruch 12 angegebene Gasentladungsröhre erreicht mit einem Entladungsgasmaterial, das unter Betriebsbedingungen ein Entladungsgas bildet, wobei das Entladungsgasmaterial in der Innenwand der Gasentladungsröhre eingelagert ist und kein kondensiertes Entladungsgasmaterial mehr in der Gasentladungsröhre vorhanden ist.

In überraschender Abkehr vom Stand der Technik wird daher eine Gasentladungsröhre hergestellt, die keinen "cold spot" aufweist.

Aufgrund der komplizierteren Verhältnisse, die in einer Gasentladungslichtquelle im Betrieb herrschen und die von der Temperatur der Entladungsröhre, den Verhältnissen in dem gezündeten Entladungsgasplasma, aber auch von Gasströmungsvorgängen in der Gasentladungsröhre abhängen, ist der Wirkungsmechanismus, aufgrund dessen die vorteilhaften Eigenschaften einer nach dem erfindungsgemäßen Verfahren hergestellten Gasentladungslichtquelle zustandekommen, noch nicht völlig aufgeklärt. Es scheint jedoch, daß das Verhältnis von Elektronenenergie und Elektronendichte im Plasma zum Partialdruck des Entladungsgases stets gewisse Bereiche aus dem Spektrum des Entladungsgases bevorzugt darstellt.

Es wird vermutet, daß durch das erfindungsgemäße Verfahren ein Teil des Entladungsgases so in den Wänden der Gasentladungsröhre abgelagert wird, daß sich später unter Betriebsbedingungen eine optimale Entladungsgaskonzentration einstellt. Die elektromagnetische Strahlungsleistung in erwünschten Spektralbereichen von nach dem erfindungsgemäßen Verfahren hergestellten Gasentladungslichtquellen beträgt ein Mehrfaches der nach dem Stand der Technik erzielbaren Leistung, typischerweise mindestens 300 %.

Vorteilhafte Ausgestaltungen der Erfindung sind in den Unteransprüchen angegeben.

Vorteilhafterweise wird als Entladungsgas Quecksilber eingesetzt, das als reines Quecksilber oder als Amalgam vorliegen kann. Zusätzlich kann die Gasentladungsröhre mit einem Edelgas oder einer Mischung von Edelgasen gefüllt werden, insbesondere um eine leichtere Zündung und ein stabileres Plasma zu erreichen.

Bei einer vorteilhaften Ausgestaltung des erfindungsgemäßen Verfahrens ist vorgesehen, daß vor dem Zünden der mit dem Entladungsgas gefüllten Gasentladungsröhre eine Erhitzung der Gasentladungsröhre erfolgt. Der Zeitraum für die Erhitzung beträgt vorteilhafterweise etwa 2 Stunden, und zwar bei einer Temperatur von etwa 250 °C.

Um zu vermeiden, daß sich bei dem Formierungsvorgang Entladungsgas an einer Stelle niederschlägt, die später im Betrieb der Gasentladungsröhre mit dieser in Verbindung steht, wird während des Formierungsvorgangs der zur Gasentladungsröhre führende Abschnitt des Reservoir vorteilhafterweise auf einer Temperatur gehalten, die gleich oder größer ist als die Wandtemperatur der Gasentladungsröhre.

Zur Einstellung des optimalen Partialdrucks des Entladungsgases beim Formierungsvorgang wird vorzugsweise die Temperatur des Reservoirs variiert.

Hierbei wird vorzugsweise die Temperatur des Reservoirs erniedrigt, so daß der Partialdruck des Entladungsgases abnimmt.

Bei einer besonders vorteilhaften Ausgestaltung des erfindungsgemäßen Verfahrens ist bei dem Formierungsvorgang die elektrische Betriebsleistung der Gasentladungsröhre um etwa 25 % bis etwa 50 % höher als die angestrebte Dauerbetriebsleistung.

Die Erfindung wird nachstehend anhand zeichnerisch dargestellter Ausführungsbeispiele näher erläutert, aus welchen sich weitere Vorteile ergeben. Es zeigt:
- Fig. 1: eine Quecksilberdampflampe mit angesetztem Pumprohr;
- Fig. 2: die in einen aufheizbaren Behälter eingebrachte Quecksilberdampflampe gemäß Fig. 1;
- Fig. 3: die Quecksilberdampflampe gemäß Fig. 1, deren abgeschmolzenes (verschlossenes) Pumprohr in einen Behälter eingetaucht ist, dessen Temperatur variiert werden kann, sowie eine Meßeinrichtung zur Bestimmung der von der Quecksilberdampflampe emittierten Intensität der elektromagnetischen Strahlung; und
- Fig. 4: eine weitere, jedoch elektrodenlose Gasentladungsröhre, bei welcher die Entladung mit Mikrowellenstrahlung aufrechterhalten wird.

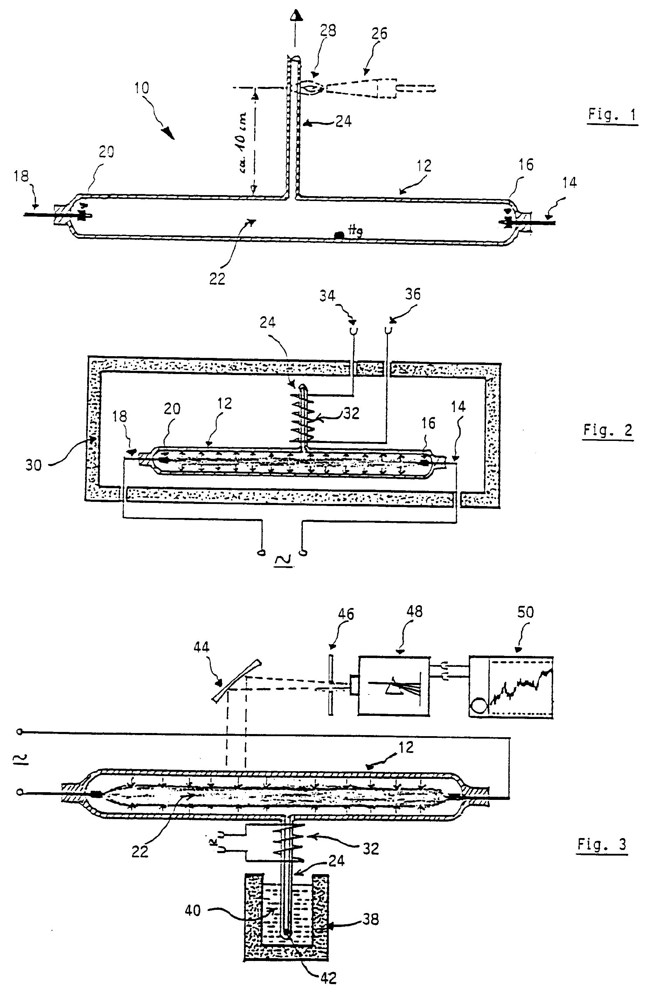

Die in Fig. 1 dargestellte Gasentladungsröhre 10 ist an sich aus dem Stand der Technik bekannt. Ein röhrenförmiges Quarzrohr 12 ist an seinen Enden gasdicht verschmolzen, wobei an den Enden Stromzuführungen 14 bzw. 18 für thermoemissive Elektroden 16 bzw. 20 eingeschmolzen sind. Mit dem Entladungsraum 22 des Quarzrohrs 12 steht ein Pumprohr 24 in Verbindung. Dieses kann gezielt erwärmt werden, nämlich über die Flamme 28 eines Brenners 26.

In Fig. 2 ist das Quarzrohr 12 in einen aufheizbaren Behälter 30 eingebracht. Das Pumprohr 24 ist von einer Heizwicklung 32 umgeben, die über Anschlußleitungen 34, 36 mit Strom versorgt wird. Weiterhin sind in Fig. 2 schematisch die Zuleitungen für die Stromzuführungen 14, 18 dargestellt, um an diese eine Wechselspannung anzulegen.

Fig. 3 zeigt die Gasentladungslichtquelle mit dem Quarzrohr 12 sowie eine Einrichtung zur Temperatureinstellung des Pumprohrs 24 und eine Meßeinrichtung zur Bestimmung und Überwachung der von der Gasentladungslichtquelle abgegebenen elektromagnetischen Strahlung im jeweils interessierenden Spektralbereich.

Die aus einem bestimmten Bereich des Entladungsraums 22 austretende elektromagnetische Strahlung gelangt über einen Spiegel 44 und eine Blende 46 auf ein schematisch dargestelltes Spektralphotometer 48, dessen Ausgangssignal, nämlich die elektromagnetische Intensität in dem jeweils eingestellten Spektralbereich, auf einen Schreiber 50 gegeben wird, der die Intensität als Funktion der Zeit registriert.

Das mit der bereits beschriebenen Heizeinrichtung 32 versehene Pumprohr 24 ist abgeschmolzen, also verschlossen, und am unteren Ende des abgeschmolzenen Pumprohrs 24 befindet sich ein Tropfen 42 kondensierten Quecksilbers. Dies ist allerdings von der Temperatur abhängig, auf welcher sich dieser Abschnitt des Pumprohrs 24 befindet, und zur Temperatureinstellung ist das Pumprohr 24 in eine Flüssigkeit 40 eingetaucht, mit der ein temperatureinstellbarer Behälter 38 gefüllt ist.

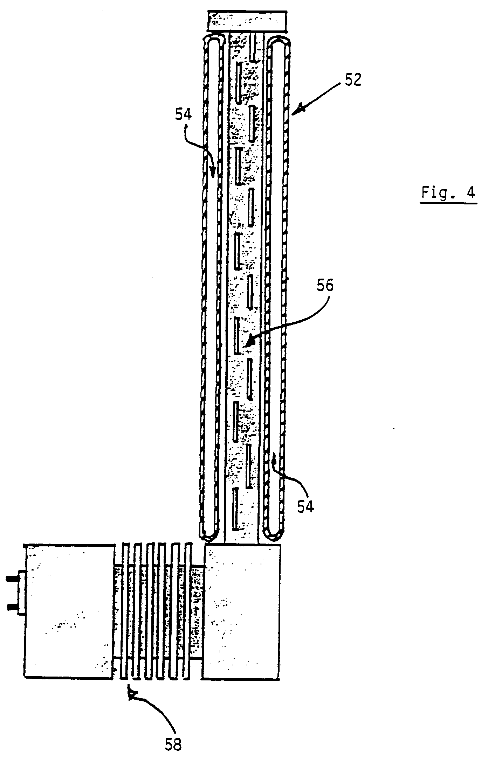

Fig. 4 zeigt eine weitere Ausführungsform einer Gasentladungslichtquelle, bei der - anders als bei der in den Figuren 1 bis 3 beschriebenen Ausführungsform - die elektrische Leistung nicht mittels Elektroden in eine Gasentladungsröhre 52 eingebracht wird, sondern (elektrodenlos) über Mikrowellenstrahlung.

Hierzu ist die Gasentladungsröhre 52 gemäß Fig. 4 als doppelwandiges, hohles Quarzrohr mit konzentrischen Wänden ausgebildet. Der Entladungsraum 54 wird durch den ringförmigen Raum zwischen dem äußeren und dem inneren Rohr gebildet. Die konzentrischen Röhren sind an ihren Enden miteinander gasdicht verschmolzen.

Die Zufuhr elektrischer Energie erfolgt durch die von einer Magnetronröhre 58 erzeugte Mikrowellenstrahlung, die von einer radial abstrahlenden Hohlleiter-Schlitzantenne 56 emittiert wird.

Das erfindungsgemäße Verfahren läßt sich bei mit Elektroden versehenen Gasentladungsröhren sowie ebenso bei elektrodenlosen Gasentladungsröhren einsetzen.

Das in den Figuren 1 bis 3 dargestellte Gasentladungsrohr 12 wird nach den üblichen Schritten, wie Reinigungspumpen, Evakuieren, gegebenenfalls einer Aktivierung der Elektroden 16, 20, in bekannter Weise mit einem Zündedelgas, wie beispielsweise Argon, Krypton, Xenon, Neon oder einem Gemisch solcher Gase, mit einem Druck von 50-500 Pascal gefüllt, vorzugsweise 150 Pascal. Dann wird eine geringe Menge von etwa 15-20 mg reinen, elementaren Quecksilbers eingebracht. Das Pumprohr 24 wird daraufhin so abgeschmolzen, daß die verbleibende Länge etwa 10 cm beträgt.

Dann wird die bereits funktionsfähige Gasentladungslichtquelle, die aber noch nicht optimiert ist, in den als Wärmeschrank ausgebildeten Behälter 30 eingebracht und vorzugsweise dort etwa 2 Stunden lang bei einer Temperatur von 250 °C vorgeheizt.

Dann wird die Gasentladung in dem Gasentladungsrohr 12 gezündet und mit einer um etwa 25 % bis etwa 50 % höheren elektrischen Leistung betrieben, als es der späteren, gewünschten Betriebsleistung entspricht. Hierbei wird das zugeschmolzene Pumprohr 24 durch die gesonderte Heizvorrichtung 32 mindestens auf die Wandtemperatur des Gasentladungsrohrs 12 gebracht.

Offenbar diffundieren durch den vergleichsweise hohen Quecksilberdampfdruck im System Quecksilberatome und -moleküle in die oberen Molekülschichten der Innenwand des heißen Gasentladungsrohrs 12. Nach Beendigung dieses Einbrenn-Diffusionsvorgangs, der unter den voranstehend angegebenen Bedingungen etwa 30 Minuten dauert, wird die Zündspannung abgeschaltet, und die Röhre erkaltet langsam in dem Wärmebehälter 30. Dabei findet offenbar noch eine weitere Diffusion von Quecksilber in die Innenwand des Gasentladungsrohrs 12 statt.

Wie in Fig. 3 dargestellt ist, wird dann die Meßeinrichtung 44-50 angebracht, um die im Betrieb von dem Gasentladungsrohr 12 emittierte, erwünschte elektromagnetische Strahlung zu registrieren, also im vorliegenden Fall die 254-nm-Linie des Quecksilbers.

Es muß dafür gesorgt werden, daß sich das Gasentladungsrohr 12 in einer Umgebung mit einer Temperatur befindet, welche annähernd der Umgebungstemperatur des späteren Anwendungszwecks entspricht. Das zweckmäßigerweise nach unten gerichtete Pumprohr 24 wird auf einer an das Gasentladungsrohr 12 angrenzenden Strecke von etwa 30-40 mm mit der Heizvorrichtung 32 erwärmt. Es hat sich herausgestellt, daß unter allen Umständen vermieden werden muß, daß sich in diesem Bereich, nämlich der späteren Abschmelzstelle, kondensiertes Quecksilber bilden kann, das nämlich wieder in das Gasentladungsrohr 12 zurückdampfen könnte. Daher wird dieser Abschnitt des Pumprohrs 24 auf eine Temperatur erhitzt, die höher ist als die Temperatur der Wand des Gasentladungsrohrs 12 unter Betriebsbedingungen.

Nun wird die Gasentladung gezündet und mit der gewünschten Betriebsleistung unterhalten. Nach einiger Zeit stellt sich ein Temperaturgleichgewicht mit der Umgebung ein.

Der untere Teil des Pumprohrs 24 wird nun in das Gefäß 38 mit der Flüssigkeit 40 eingetaucht. Im vorliegenden Fall ist die Flüssigkeit eine Kühlflüssigkeit, nämlich eine Salzlösung von etwa -3 °C. Daraufhin bildet sich im gekühlten Teil des Pumprohrs 24 ein Kondensat 42, nämlich ein Quecksilbertröpfchen, und das Plasma im Gasentladungsraum 22 verarmt an Quecksilber.

Wenn nun der Quecksilber-Partialdruck im Plasma geringer wird als der Diffusionsdruck des in der Innenwand des Gasentladungsrohrs 12 eingelagerten Quecksilbers, so beginnt die Rückdiffusion von Quecksilber in den Entladungsraum 22. Hierfür sind besonders die Wandtemperatur des Gasentladungsrohrs 12 und die Menge des eindiffundierten Quecksilbers von Bedeutung. Infolge weiterer Verarmung des Plasmas an Quecksilber durch fortlaufende Kondensation des Quecksilbers im gekühlten Teil des Pumprohrs 24 und der ebenfalls fortschreitenden Verarmung der Wände des Gasentladungsrohrs 12 an eindiffundiertem Quecksilber infolge einer Rückdiffusion stellt sich ein Gleichgewichtszustand des Quecksilber-Partialdrucks im Plasma und des Diffusionsdrucks aus der Innenwand der Gasentladungsröhre bei immer geringeren Werten ein.

Die vom Schreiber 50 registrierte Intensität der 254-nm-Linie des Quecksilbers ist in der Anfangsphase sehr gering und erreicht ungeachtet der vergleichsweise hohen Betriebsleistung der Röhre nur einen Bruchteil jener Werte, wie sie bei einer Standard-Niederdrucklampe gleicher Abmessungen erreicht würden. Mit fortschreitender Verringerung der Quecksilberkonzentration im Plasma steigt die gemessene elektromagnetische Strahlungsintensität an und erreicht schließlich einen Spitzenwert, der im Vergleich mit einer Standard-Niederdrucklampe der Erhöhung der elektrischen Betriebsleistung im vorliegenden Fall annähernd proportional ist.

Sobald der sich ergebende Intensitäts-Maximalwert erreicht wird, der von dem Photometer 48 bzw. dem hieran angeschlossenen Schreiber 50 registriert wird, wird möglichst rasch das Pumprohr 24 mit dem darin enthaltenen kondensierten Quecksilber von der Gasentladungsröhre abgeschmolzen, um den erreichten optimalen Zustand zu fixieren. Hierbei erfolgt das Abschmelzen in der geheizten Zone des Pumprohrs 24, in welcher sich mit Sicherheit kein kondensiertes Quecksilber niedergeschlagen hat, und zwar möglichst nahe an der Gasentladungsröhre.

Offenbar werden, wenn das Gasentladungsrohr 12 nach dem Abschalten der Entladung auskühlt, die Quecksilberatome oder -moleküle wieder von der Wand des Gasentladungsrohrs 12 gebunden. Dies zeigt sich deutlich bei erneuter Inbetriebnahme des (kalten) Gasentladungsrohrs 12. Nach dem Zünden erhält man zunächst nur eine reine Edelgasentladung. Die Emission der gewünschten Quecksilberstrahlung mit 254 nm tritt erst dann wieder intensiv auf, wenn die Wand des Gasentladungsrohrs 12 wieder annähernd ihre Soll-Betriebstemperatur erreicht, die auch während des Formierungsvorgangs zu dem Zeitpunkt herrschte, in welchem das Intensitätsmaximum der emittierten Strahlung erreicht wurde, und die Wand die gebundenen Quecksilberatome genau in der Menge abgibt, daß sich die optimalen Verhältnisse im Plasma einstellen. Dies wird dadurch bestätigt, daß nach dem Wiedereinschalten das Auftreten der elektromagnetischen Strahlung mit einer Wellenlänge von 254 nm zunächst an den Stellen der Wand des Gasentladungsrohrs 12 bemerkbar ist, die sich in unmittelbarer Umgebung der glühenden Elektroden 16, 20 befinden, da diese Stellen der Wand des Gasentladungsrohrs 12 sehr rasch auf eine genügend hohe Temperatur kommen.

Es zeigt sich daher, daß durch den erfindungsgemäßen Formierungsvorgang bei der Herstellung einer Gasentladungslichtquelle optimale Verhältnisse geschaffen werden, die bestimmte Betriebswerte zur Folge haben, die bei dem späteren bestimmungsgemäßen Betrieb der Gasentladungslichtquelle wieder im wesentlichen eingehalten werden müssen. Es ist allerdings möglich, eine Anpassung an deutlich veränderte Umgebungstemperaturen der Gasentladungslichtquelle vorzunehmen; dies kann etwa durch geeignete Erhöhung oder Verminderung der elektrischen Betriebsleistung erreicht werden.

Das erfindungsgemäße Verfahren ist nicht auf Quecksilber oder Quecksilberamalgam beschränkt, sondern läßt sich bei zahlreichen Entladungsgasen einsetzen. In jedem Falle wird offenbar praktisch durch den erfindungsgemäßen Formierungsvorgang eine Konzentration des Entladungsgasmaterials eingestellt, welche im Betrieb der Gasentladungslichtquelle einen für die gewünschten Wellenlängen optimalen Wert annimmt, offenbar durch Rückdiffusion aus den Innenwänden der Gasentladungsröhre.

Hierbei ist das erfindungsgemäße Verfahren nicht von der Art der verwendeten Gasentladungsröhre abhängig. Insbesondere können sowohl mit Elektroden versehene Gasentladungsröhren eingesetzt werden und ebenso sogenannte "elektrodenlose" Gasentladungsröhren, von denen ein Beispiel in Fig. 4 dargestellt ist.

Das Verfahren gemäß der vorliegenden Erfindung wird weiterhin anhand der nachstehenden Versuche I bis III näher erläutert.

### Versuch I

Mit einer Meßanordnung gemäß Fig. 3 zur Bestimmung der Intensität der 254-nm-Linie des Quecksilbers wurden die Intensität einer nach dem erfindungsgemäßen Verfahren hergestellten Gasentladungslichtquelle und einer handelsüblichen 40-Watt-UVC-Quecksilber-Niederdrucklampe aus "ozonfreiem" Quarzglas als Vergleichsnormal registriert. Hierbei wurden die zu vergleichenden Gasentladungslichtquellen durch eine senkrecht zur jeweiligen Längsachse der betreffenden Gasentladungslichtquelle stehende Spaltblende so abgeschirmt, daß der gesamte Durchmesser der Gasentladungslichtquelle abgetastet wurde, aber nur ein wenige mm langer, stets gleichbleibender Längenabschnitt. Bei allen Vergleichsmessungen blieben die Anordnung der Blenden, die Meßentfernung und die Empfindlichkeit des Spektralphotometers unverändert.

Die handelsübliche Niederdruckröhre wies folgende Abmessungen auf: Gesamtlänge etwa 850 mm, Distanz zwischen den Elektroden etwa 770 mm, Außendurchmesser 19 mm und Wandstärke 1 mm.

Die Vergleichs-Gasentladungslichtquelle wurde gezündet, und nach 15 Minuten Brenndauer wurde die Strahlungsintensität der 254-nm-Spektrallinie aufgezeichnet. Der erhaltene Intensitätsmeßwert wurde als Basiswert von 100 % aufgefaßt, der Meßwert wurde vor jeder Messung neu überprüft. Die Vergleichs-Gasentladungslichtquelle wurde mit einer Brennspannung von 103 Volt und einem Brennstrom von 0,4 Ampere betrieben.

Die Gasentladungslichtquelle, die nach dem erfindungsgemäßen Verfahren hergestellt wurde, bestand aus genau den gleichen Materialien wie die Vergleichs-Gasentladungslichtquelle und wies dieselben Abmessungen auf, hatte jedoch Wolfram-Stufenelektroden eingeschmolzen, die für eine Dauerbelastung von etwa 3 Ampere ausgelegt waren.

Die nach der vorliegenden Erfindung hergestellte Gasentladungslichtquelle wird nachstehend abgekürzt als "Versuchsröhre" bezeichnet.

Die Versuchsröhre wurde auf bekannte Weise ausgeheizt, evakuiert und gespült, und ihre Elektroden wurden durch Ionenbeschuß ausgeglüht und formiert. Dann wurde die Versuchsröhre mit reinem Argon bei einem Druck von etwa 200 Pascal gefüllt. Das Pumprohr befand sich in etwa 10 cm Entfernung von dem einen Ende der Versuchsröhre und wies einen Außendurchmesser von 4 mm und einen Innendurchmesser von 2 mm auf. Nach unten war das Versuchsrohr zu einer U-förmigen Schlinge gebogen, so daß beim Einbringen von 20 mg reinem Quecksilber unter Vakuum die sich ergebende kleine Quecksilberkugel nicht in die Versuchsröhre fallen konnte, sondern in der U-förmigen Schlinge des Pumprohrs liegenblieb. Nachdem das Pumprohr versiegelt und erkaltet war, konnte die Quecksilberkugel an das versiegelte, zugeschmolzene Ende des Pumprohrs gerollt werden. An dem zur Versuchsröhre führenden Ansatz des Pumprohrs wurde mehrere schmale Streifen aus Aluminiumfolie so aufgewickelt, daß die Erhitzung der Versuchsröhre einen etwa 30 mm langen Abschnitt des Pumprohrs miterwärmte. Dann wurde die Versuchsröhre in die Meßvorrichtung gebracht und gezündet.

Der elektrische Betriebsstrom der Gasentladung wurde über einen Drossel-Ballast mithilfe eines Netz-Regeltransformators auf 3 Ampere eingeregelt. Nach 10 Minuten Brenndauer war die Temperatur der Versuchsröhre auf etwa 170 °C angestiegen und blieb weitgehend konstant. In diesem Stadium lag praktisch nur eine reine Argon-Entladung vor, und die auf die 254-nm-Linie eingestellte Meßeinrichtung zeigte so geringe Werte an, daß keine eindeutige Zuordnung möglich war.

Dann wurde das Pumprohr mit dem an dessen Ende angeordneten Quecksilberkügelchen in ein Wasserbad mit einer Temperatur von 50 °C gebracht. Obwohl sich bei dieser Temperatur ein genügender Dampfdruck des Quecksilbers einstellen müßte, wie aus den eingangs angegebenen Werten hervorgeht, konnte auch nach einer Zeitdauer von 10 Minuten keine nennenswerte Intensität auf der 254-nm-Linie festgestellt werden.

Nun wurde die Wassertemperatur auf 90 °C erhöht. Nach wenigen Minuten konnte beobachtet werden, daß sich nahe der Einmündung des Pumprohrs in die Versuchsröhre eine leuchtende Zone im Plasma ausbildete, die sich aber nicht auszubreiten schien. Die von der Meßeinrichtung registrierte Strahlungsintensität betrug ca. 17 % und blieb relativ konstant. Dann wurde das Wasserbad vom Pumprohr entfernt, und bald darauf verringerte sich die Strahlungsintensität deutlich. Auch wenn zwischendurch eine Temperatur des Wasserbads von 50 °C eingesetzt wurde, verschwand die leuchtende Zone im Plasma in der Nähe des Pumprohrs. Offenbar wurden die aus dem Pumprohr aufsteigenden geringen Quecksilbergasmengen von den heißen Wänden der aus Quarz bestehenden Versuchsröhre gebunden oder difundierten in diese ein und wurden auf solche Weise dem Plasma entzogen. Sobald wieder eine Temperatur des Wasserbads von 90 °C eingesetzt wurde, traten die ursprünglichen Erscheinungen wieder auf.

Im Verlauf der nächsten 50 Minuten stieg die Strahlungsintensität auf der 254-nm-Linie langsam, aber kontinuierlich an und erreichte schließlich 100 % relativer Intensität. Dieser kontinuierliche Intensitätsanstieg setzte sich fort, offenbar deswegen, weil die heißen Wände der Versuchsröhre immer weniger Quecksilber absorbierten, so daß mehr Quecksilber für das Plasma zur Verfügung stand, und nach etwa 120 Minuten war die Strahlungsintensität auf etwa 325 % gestiegen und blieb etwa 10 Minuten lang konstant.

Als dann die Intensität einen schwachen Abfall zeigte, wurde schnell die Entladung abgeschaltet, die Wärmedämmung (Aluminiumstreifen) um den Ansatz des Pumprohrs herum entfernt, und dann wurde dieses nahe dem Ansatz zur Versuchsröhre abgeschmolzen.

Die erneute Zündung der noch nicht vollständig abgekühlten Versuchsröhre und deren erneuter Betrieb mit wiederum 3 Ampere Stromstärke führte bald wieder zu dem maximalen Intensitätswert von 325 %, der jedoch dann deutlich abnahm. Daraufhin wurde die Stromstärke auf etwa 2,5 Ampere reduziert, wodurch sich die Temperatur der Versuchsröhre auf etwa 145 °C verringerte, und hierauf stabilisierte sich die Intensität der Strahlung auf der 254-nm-Linie bei einem Wert von 300 %. Dies Ergebnis war reproduzierbar, da eine erneute Erhöhung der Stromstärke auf 3 Ampere den Intensitätswert vorübergehend rasch auf 325 % ansteigen ließ, der anschließend jedoch wieder absank. Eine Rückkehr auf einen Entladungsstrom von 2,5 Ampere stabilisierte die Strahlungsintensität wieder bei einem Wert von 300 %.

Dann wurde das Spektrum in einem Bereich zwischen 280 und 230 nm aufgenommen. Hierbei ergab sich eine einzige Spitze bei 254 nm mit einer Intensität von 300 %.

24 Stunden später wurde eine Kontrollmessung durchgeführt. Hierbei war unmittelbar nach der Zündung der kalten Versuchsröhre bei 2,5 Ampere Entladungsstrom das typische bläulich-weiße Leuchten des Plasma nur bei den glühenden Elektroden zu sehen. Der überwiegende, kalte Teil der Versuchsröhre zeigte nur die wäßrig-blaue Leuchterscheinung der Argon-Entladung. Die Meßeinrichtung zeigte für diesen Abschnitt der Versuchsröhre keine nennenswerte Strahlung auf der 254-nm-Linie an. Eine derartige intensive Strahlung konnte jedoch örtlich begrenzt sofort dann erhalten werden, wenn der kalte Abschnitt der Versuchsröhre irgendwo mit der Flamme eines Gasbrenners erhitzt wurde. Der sich ergebende, hell leuchtende Plasmafleck verflüchtigte sich bald wieder, wenn die Flamme entfernt wurde. Nach Ablauf von etwa 7 Minuten verbreitete sich das typische bläulich-weiße Leuchten von den Elektroden her gegen die Mitte der Versuchsröhre und erfüllte diese schließlich gleichmäßig, wobei der Intensitätsmeßwert rapide anstieg, um sich dann bei 300 % Strahlungsintensität zu stabilisieren.

Die elektrischen Betriebsdaten waren 61 Volt für die Brennspannung der Versuchsröhre und 2,5 Ampere für den Brennstrom.

### Versuch II

Die Versuchsröhre wies folgende Abmessungen auf: Gesamtlänge etwa 850 mm, Distanz zwischen den Elektroden etwa 770 mm, Außendurchmesser 23 mm und Wandstärke 1 mm. Als Elektroden wurden die gleichen Wolfram-Stufenelektroden für 3 Ampere Dauerbelastung eingeschmolzen wie bei dem Versuch I. Die Versuchsröhre wurde in bekannter Weise ausgeheizt, evakuiert, nach Ausglühen und Formieren der Elektroden mit reinem Argon unter einem Druck von etwa 250 Pascal gefüllt, und dann wurden 20 mg reines Quecksilber eingeführt. Das gerade Pumprohr wurde mit einer verbleibenden Länge von etwa 10 cm abgeschmolzen. Das Quecksilberkügelchen befand sich in der Versuchsröhre, und diese wurde in einen heizbaren Behälter eingebracht, wie er etwa in Fig. 2 dargestellt ist, und dort 2 Stunden lang einer Temperatur von 250 °C ausgesetzt.

Nach der Registrierung des "Vergleichsnormals" anhand der handelsüblichen 40-Watt-UVC-Vergleichsröhre wurde die Versuchsröhre in die Intensitätsmeßeinrichtung gebracht, gezündet und mit 4 Ampere Entladungsstrom betrieben. Wiederum wurde das Pumprohr nahe dem Körper der Versuchsröhre mit Aluminiumfolie bewickelt wie im Beispiel I.

Zunächst zeigten sich die bekannten Erscheinungen der Entladung; bei der hohen Stromstärke von 4 Ampere leuchtete die Plasmasäule grellweiß, war etwas eingeschnürt und zeigte eine leichte Welligkeit und Bewegung. Die Strahlungsintensität der Versuchsröhre auf der 254-nm-Linie betrug etwa 30 % (relativ zur Vergleichsröhre).

Nach 15 Minuten Brenndauer, wobei auch gelegentlich das Pumprohr mit einer Gasflamme erhitzt wurde, um zunächst eine Kondensatbildung des Quecksilbers zu vermeiden, wurde das Pumprohr in ein Wasserbad mit Raumtemperatur getaucht. Während der nächsten 25 Minuten stieg die Strahlungsintensität auf der 254-nm-Linie nur unwesentlich an. Dann wurde das Kühlwasser für das Pumprohr durch Eiswasser mit zahlreichen darin schwimmenden Eisstückchen ersetzt. Nun ergab sich ein langsamer, aber kontinuierlicher Anstieg der Strahlungsintensität, und nach etwa 80 Minuten war ein Maximalwert von beinahe 400 % erreicht. Die Plasmasäule hatte die typische bläulich-weiße Farbe angenommen, brannte gleichmäßig ruhig und füllte den gesamten Durchmesser der Versuchsröhre aus.

Nun wurde das Eiswasser entfernt, die Aluminiumstreifen des Pumprohrs in der Nähe des Körpers der Versuchsröhre wurden entfernt, und dann wurde das Pumprohr an dieser Stelle rasch abgeschmolzen. Die erneute Zündung der Versuchsröhre ergab eine stabile Strahlungsleistung auf der 254-nm-Linie von etwa 375 %, wenn die Stromstärke auf 3,6 Ampere reduziert wurde.

Nach 24 Stunden wurde eine Kontrollmessung vorgenommen, welche die aus dem Versuch I bekannten Erscheinungen zeigte. Nach dem Zünden der Versuchsröhre zeigte sich eine strahlungsintensive, bläulich-weiße Plasmazone zunächst nur in unmittelbarer Nähe der hell glühenden Elektroden und pflanzte sich mit steigender Temperatur der Versuchsröhre langsam in Vorwärtsrichtung fort, um nach etwa 8 bis 10 Minuten den Körper der Versuchsröhre gleichmäßig zu erfüllen. Die Erwärmung eines noch relativ kühlen Abschnitts der Versuchsröhre mit einer Gasflamme erzeugte an der betreffenden Stelle eine strahlungsintensive, hell leuchtende Plasmazone, die nach Entfernung der Flamme und Abkühlung der betreffenden Stelle wieder zurückging. Nach etwa 15 Minuten war ein thermisches Gleichgewicht mit der Umgebung erreicht, und es ergab sich eine konstante Strahlungsintensität auf der 254-nm-Linie von 370 bis 375 % bei einer Stromstärke von 3,6 Ampere.

Wurde bei einer erneuten Zündung der kalten Versuchsröhre die Stromstärke zunächst auf 4,2 Ampere eingestellt, so dauerte es nur etwa 6 bis 7 Minuten, bis auch in der Mitte der Versuchsröhre eine hohe Strahlungsintensität von etwa 400 % gemessen werden konnte, die sich jedoch bald wieder verringerte.

Wurde dann wieder ein Wert von 3,6 Ampere Entladungsstrom eingestellt, so stabilisierte sich die Versuchsröhre bei einer Strahlungsintensität von wiederum 370 bis 375 %. Diese Intensität wurde bei einer Brennspannung von 55 Volt und bei einem Brennstrom von 3,6 Ampere erzielt.

Zwar war der Wert der erhaltenen Strahlungsintensität etwas niedriger als erwartet. Dies lag aber offenbar daran, daß die auf 3 Ampere ausgelegten Elektroden über ihre Leistungsfähigkeit hinaus belastet wurden, wenn die Versuchsröhre mit einem Brennstrom von 3,6 Ampere betrieben wurde und daher die Elektroden bereits Abdampf- und Ausgasungsprodukte abgaben, welche die Zusammensetzung des Plasmas in der Versuchsröhre kontaminierten.

### Versuch III

Bei diesem Vergleichsversuch sollte geprüft werden, ob sich die voranstehend erläuterten Eigenschaften auch bei einer "elektrodenlosen" Versuchsröhre feststellen ließen. Hierbei kam es nicht auf eine quantitative Festlegung der einzelnen Parameter an, sondern es sollte nur die qualitative Übereinstimmung geprüft werden.

Es wurde eine doppelwandige Versuchsröhre angefertigt, die aus zwei ineinandergeschobenen und konzentrisch angeordneten Quarzröhren bestand. Die äußere Röhre hatte einen Durchmesser von 23 mm. Die Enden der beiden Röhren wurden gasdicht miteinander verschmolzen; der Durchgang der inneren Röhre war frei, so daß die doppelwandige Röhre ähnlich einer Hülse über einen Stab geschoben werden konnte. An der äußeren Röhre war etwa 10 cm vom Ende entfernt ein Pumprohr angebracht, das eine Verbindung zu dem ringförmigen Hohlraum zwischen den beiden Röhren aufwies, wodurch dieser evakuiert werden konnte.

Diese Hohlmantelröhre wurde in bekannter Weise ausgeheizt, evakuiert, mit reinem Argon gefüllt bei einem Druck von etwa 200 Pascal und erhielt eine Quecksilberdosierung von 20 mg. Dann wurde das Pumprohr mit einer verbleibenden Länge von etwa 8 cm versiegelt.

Die Versuchsröhre wies eine Gesamtlänge von 750 mm auf, einen Außendurchmesser von 23 mm, einen Innendurchmesser von 15 mm und eine Wandstärke von jeweils 1 mm.

Diese "elektrodenlose" Versuchsröhre wurde auf ein Aluminiumrohr aufgeschoben, das einen Durchmesser von 14 mm und 100 cm Länge aufwies. Dieses Aluminiumrohr wurde auf eine Magnetronröhre (Mikrowellenröhre) mit einer Leistung von 450 Watt aufgeschoben und diente als Antenne.

Diese Anordnung aus Versuchsröhre, Antenne und Magnetronröhre wurde in die Meßeinrichtung zur Bestimmung der Intensität der Strahlung auf der 254-nm-Linie gebracht, die Magnetronröhre mithilfe eines Luftgebläses gekühlt und dann die Stromversorgung für die Magnetronröhre eingeschaltet. Wenige Sekunden nach dem Einschalten des Stroms begann die Versuchsröhre spontan zu leuchten und sehr rasch (innerhalb von 30 Sekunden) mit dem hellen Licht der Quecksilberentladung zu strahlen. Das auf die 254-nm-Linie eingestellte Spektralphotometer 48, 50 registrierte innerhalb einer Minute eine Strahlungsintensität von etwa 280 %, die dann beinahe ebenso schnell wieder abnahm und sich dann bei etwa 20 bis 25 % stabilisierte. Auch nach einer weiteren Brenndauer von 20 Minuten stieg die Strahlungsintensität nicht wieder an.

Dann wurde die Stromversorgung für die Magnetronröhre abgeschaltet und das Pumprohr in ein Gefäß mit Eiswasser getaucht. Die Röhre wurde erneut gezündet, und zunächst war das Verhalten der Versuchsröhre ebenso wie beim ersten Versuch. Auf einen raschen Anstieg der Strahlungsintensität auf der 254-nm-Linie folgte ein beinahe ebenso rascher Abfall auf geringe Werte. Nach etwa 10 Minuten allerdings stieg die Intensität der Strahlung auf der 254-nm-Linie langsam und erreichte nach etwa 40 Minuten einen Maximalwert von etwa 290 %, der über einen längeren Zeitraum konstant blieb, um danach langsam wieder abzufallen.

Hier wurde der Versuch abgebrochen, da es auf quantitative Aussagen nicht ankam; hierzu hätte etwa auch die in die Versuchsröhre eingekoppelte Mikrowellenenergie bestimmt werden müssen. Der gewünschte Beweis wurde durch den vorliegenden Versuch erbracht, nämlich daß das Verfahren gemäß der vorliegenden Erfindung sowohl bei mit Elektroden versehenen Versuchsröhren als auch bei "elektrodenlosen" Versuchsröhren einsetzbar ist.

Das erfindungsgemäße Verfahren ist nicht auf Quecksilber als Entladungsgas beschränkt, sondern allgemein einsetzbar, beispielsweise auch für Alkalimetalldampf-Gasentladungsröhren.

Obwohl der dem erfindungsgemäßen Verfahren zugrundeliegende Wirkungsmechanismus noch nicht vollständig aufgeklärt ist, scheint es im wesentlichen darauf anzukommen, unter Betriebsbedingungen, nämlich bei einer bestimmten Entladung mit einer bestimmten Entladungsspannung, einem bestimmten Entladungsstrom und daraus resultierender Elektronenenergie und Elektronendichte, im Plasma der Gasentladung zunächst eine genügende Konzentration des Entladungsgases so zur Verfügung zu stellen, daß sich dieses unter Einstellung eines Gleichgewichts mit dem Plasma teilweise in den heißen Wänden der Gasentladungsröhre einlagert. Dann wird der Partialdruck des "freien", nicht in den Wänden der Gasentladungsröhre abgelagerten Entladungsgases schnell so weit verringert, daß kein kondensiertes Gasentladungsmaterial mehr in der Gasentladungsröhre vorhanden ist, insbesondere kein Vorrat an kondensiertem, flüssigem Gasentladungsmaterial und insbesondere kein sogenannter "cold spot". Ein bestimmter Partialdruck der restlichen gasförmigen Entladungsmaterie in Verbindung mit der vorherrschenden Elektronendichte und Elektronenenergie scheint dann Vorzugsbedingungen für die Darstellung gewünschter Wellenlängen zu enthalten.

Die voranstehenden Überlegungen gelten selbstverständlich sinngemäß für eine Gasentladungsröhre gemäß der vorliegenden Erfindung mit einer Substanz, die unter Betriebsbedingungen ein Entladungsgas bildet und bei der die Substanz im wesentlichen in der Innenwand der Gasentladungsröhre abgelagert ist. Dabei kann die Substanz auch in einer Fluoreszenzschicht an der Innenwand der Gasentladungsröhre abgelagert sein.

## Patentansprüche

1. Verfahren zur Herstellung einer Gasentladungslichtquelle (10) zur Abgabe einer elektromagnetischen Strahlung mit einer Gasentladungsröhre (12), die mit zumindest einem Entladungsgasmaterial gefüllt ist, und mit einer Einrichtung (14-20) zur Erzeugung einer Gasentladung, mit folgenden Verfahrensschritten:
a) Zünden der mit dem Entladungsgasmaterial gefüllten Gasentladungsröhre,
b) Durchführen eines Formierungsvorgangs, bei welchem
b.1) die elektrische Betriebsleistung der Gasentladungslichtquelle mindestens so hoch ist wie die angestrebte Dauerbetriebsleistung,
b.2) die Gasentladungsröhre auf einer Temperatur gehalten wird, die mindestens so hoch ist wie die spätere Betriebstemperatur,
b.3) die Intensität der emittierten elektromagnetischen Strahlung im Bereich der gewünschten Wellenlängen überwacht wird, und
b.4) der Partialdruck des verdampften Entladungsgasmaterials variiert wird, bis die Intensität der ausgewählten elektromagnetischen Strahlung einen Maximalwert erreicht hat,
c) worauf ein Reservoir (24) mit überschüssigem Entladungsgasmaterial (42) auf solche Weise von der Gasentladungsröhre abgetrennt wird, daß die Gasentladungsröhre unter Betriebsbedingungen kein kondensiertes Entladungsgasmaterial enthält.

2. Verfahren nach Anspruch 1, dadurch gekennzeichnet, daß vor dem Schritt a) ein Einbrenn-Diffusionsvorgang mit folgenden Schritten erfolgt:
- Zünden der Gasentladungsröhre,
- Betreiben der Gasentladung mit einer elektrischen Leistung, die höher als die gewünschte spätere Betriebsleistung ist.
- wobei das Reservoir auf einer Temperatur gehalten wird, die mindestens so hoch ist wie die Wandtemperatur der Gasentladungsröhre, und
- Abschalten der Gasentladung und Abkühlenlassen der Gasentladungsröhre.

3. Verfahren nach Anspruch 1 oder 2, dadurch gekennzeichnet, daß das Entladungsgasmaterial Quecksilber ist.

4. Verfahren nach Anspruch 3, dadurch gekennzeichnet, daß zusätzlich zum Entladungsgasmaterial ein Edelgas oder eine Mischung von Edelgasen in die Gasentladungsröhre gefüllt wird.

5. Verfahren nach einem der Ansprüche 1 bis 4, dadurch gekennzeichnet, daß vorher eine Erhitzung der Gasentladungsröhre erfolgt.

6. Verfahren nach Anspruch 5, dadurch gekennzeichnet, daß die Erhitzung über einen Zeitraum von zwei Stunden erfolgt.

7. Verfahren nach Anspruch 5 oder 6, dadurch gekennzeichnet, daß die Erhitzung der Gasentladungsröhre bei einer Temperatur von 250°C erfolgt.

8. Verfahren nach einem der Ansprüche 1 bis 7, dadurch gekennzeichnet, daß der zur Gasentladungsröhre führende Abschnitt des Reservoirs auf einer Temperatur gehalten wird, welche gleich oder größer als die Wandtemperatur der Gasentladungsröhre ist.

9. Verfahren nach einem der Ansprüche 1 bis 8, dadurch gekennzeichnet, daß der Partialdruck des verdampften Entladungsgasmaterials über die Temperatur des Reservoirs variiert wird.

10. Verfahren nach Anspruch 9, dadurch gekennzeichnet, daß die Temperatur des Reservoirs erniedrigt wird, so daß der Partialdruck des verdampften Entladungsgasmaterials abnimmt.

11. Verfahren nach einem der Ansprüche 2 bis 10, dadurch gekennzeichnet, daß die elektrische Betriebsleistung beim Einbrenn-Diffusionsvorgang um etwa 25% bis 50% höher ist als die angestrebte Dauerbetriebsleistung.

12. Gasentladungsröhre hergestellt nach dem Verfahren gemäß Anspruch 1, mit einem Entladungsgasmaterial, das unter Betriebsbedingungen ein Entladungsgas bildet, dadurch gekennzeichnet, daß das Entladungsgasmaterial in der Innenwand der Gasentladungsröhre (12) eingelagert ist und kein kondensiertes Entladungsgasmaterial mehr in der Gasentladungsröhre vorhanden ist.

13. Gasentladungsröhre nach Anspruch 12, ddurch gekennzeichnet, daß das Entladungsgasmaterial ein Alkalimetall oder Quecksilber ist.

14. Gasentladungsröhre nach einem der Ansprüche 12 bis 13, dadurch gekennzeichnet, daß an der inneren Oberfläche der Gasentladungsröhre (12) eine Fluoreszenzschicht vorgesehen ist.

15. Gasentladungsröhre nach Anspruch 14, dadurch gekennzeichnet, daß das Entladungsgasmaterial ganz oder teilweise in der Fluoreszenzschicht an der Innenwand der Gasentladungsröhre abgelagert wird.

## Claims

1. Method of manufacture of a gas discharge light source (10) for emitting an electromagnetic radiation and comprising a gas discharge tube (12) filled with at least one discharge gas material and comprising a device (14 - 20) for generating a gas discharge, the method comprising the following steps:
a) igniting the gas discharge tube filled with the discharge gas material,
b) performing a forming operation, in which
b.1) the electrical operating power of the gas discharge light source is at least as high as the desired continuous operation power,
b.2) the gas discharge tube is held at a temperature which is at least as high as the later operating temperature,
b.3) the intensity of the emitted electromagnetic radiation is monitored in the region of the desired wave length, and
b.4) the partial pressure of the vaporized discharge gas material is varied until the intensity of the selected electromagnetic radiation has reached a maximum value,
c) whereupon a reservoir (24) with excess discharge gas material (42) is separated from the gas discharge tube in such a manner that the gas discharge tube does not contain under operating conditions any condensed discharge gas material.

2. Method according to claim 1, characterized in that a burning-in diffusion operation is conducted before step a), comprising the following steps:
- igniting the gas discharge tube,
- operating the gas discharge with an electric power higher than the desired later operating power,
- the reservoir being held at a temperature which is at least as high as the wall temperature of the gas discharge tube, and
- switching off the gas discharge and letting the gas discharge tube cool down.

3. Method according to claim 1 or 2, characterized in that the discharge gas material is mercury.

4. Method according to claim 3, characterized in that in additional to the discharge gas material a nobel gas or a mixture of nobel gases is filled into the gas discharge tube.

5. Method according to one of claims 1 to 4, characterized in that the gas discharge tube is preheated.

6. Method according to claim 5, characterized in that the heating is conducted for a period of two hours.

7. Method according to claim 5 or 6, characterized in that the heating of the gas discharge tube is conducted at a temperature of 250°C.

8. Method according to one of claims 1 to 7, characterized in that the portion of the reservoir leading to the gas discharge tube is held at a temperature which is equal or higher than the temperature of the wall of the gas discharge tube.

9. Method according to one of claims 1 to 8, characterized in that the partial pressure of the vaporized discharge gas material is varied over the temperature of the reservoir.

10. Method according to claim 9, characterized in that the temperature of the reservoir is lowered so that the partial pressure of the vaporized discharge gas material decreases.

11. Method according to one of claims 2 to 10, characterized in that the electrical operating power is about 25 % to 50 % higher during the burning-in diffusion operation than the desired continuous operation power.

12. Gas discharge tube according to the method according to claim 1 comprising a discharge gas material which at operating conditions forms a discharge gas, characterized in that the discharge gas material is incorporated in the inner wall of the gas discharge tube (12) and no more condensed discharge gas material is present in the gas discharge tube.

13. Gas discharge tube according to claim 12, characterized in that the discharge gas material is an alkalimetal or mercury.

14. Gas discharge tube according to one of claims 12 to 13, charcterized in that a fluorescent layer is provided at the inner surface of the gas discharge tube (12).

15. Gas discharge tube according to claim 14, characterized in that the discharge gas material is completely or partially deposited in the fluorescent layer at the inner wall of the gas discharge tube.

## Revendications

1. Procédé de fabrication d'une source lumineuse par décharge dans un gaz (10) pour l'émission d'un rayonnement électromagnétique, comportant un tube pour décharge dans un gaz (12) qui est rempli d'au moins un matériau de décharge et qui comporte un dispositif (14-20) pour la création d'une décharge dans un gaz, et comportant les étapes de procédé ci-dessous:
a) allumage du tube pour décharge dans un gaz rempli du matériau de décharge,
b) réalisation d'une opération de formage, dans laquelle
b.1) la puissance électrique de service de la source lumineuse par décharge dans un gaz est au moins aussi élevée que la puissance en service permanent recherchée,
b.2) le tube pour décharge dans un gaz est maintenu à une température qui est au moins aussi élevée que la température de service,
b.3) l'intensité du rayonnement électromagnétique émis est surveillée dans la région des longueurs d'onde souhaitées, et
b.4) la pression partielle du matériau de décharge vaporisé est modifiée jusqu'à ce que l'intensité du rayonnement électromagnétique sélectionné ait atteint une valeur maximale,
c) suite à quoi un réservoir (24) comportant du matériau de décharge (42) en excès est séparé du tube de décharge de gaz, de telle sorte que le tube pour décharge dans un gaz ne contienne dans les conditions de service aucun matériau de décharge condensé.

2. Procédé selon la revendication 1, caractérisé en ce qu'avant l'étape a) s'effectue une opération de diffusion par cuisson qui comporte les étapes ci-dessous:
- allumage du tube pour décharge dans un gaz,
- mise en fonctionnement de la décharge dans un gaz, à une puissance électrique qui est supérieure à la puissance future de service souhaitée,
- tandis que le réservoir est maintenu à une température qui est au moins aussi élevée que la température de paroi du tube pour décharge dans un gaz, et
- arrêt de la décharge dans le gaz et refroidissement du tube pour décharge dans un gaz.

3. Procédé selon la revendication 1 ou 2, caractérisé en ce que le matériau de décharge est du mercure.

4. Procédé selon la revendication 3, caractérisé en ce qu'en plus du matériau gazeux de décharge, on remplit le tube pour décharge dans un gaz d'un gaz rare ou d'un mélange de gaz rares.

5. Procédé selon l'une des revendications 1 à 4, caractérisé en ce que l'on effectue préalablement un chauffage du tube pour décharge dans un gaz.

6. Procédé selon la revendication 5, caractérisé en ce que le chauffage s'effectue pendant une durée de deux heures.

7. Procédé selon la revendication 5 ou 6, caractérisé en ce que le chauffage du tube pour décharge dans un gaz s'effectue à une température de 250°C.

8. Procédé selon l'une des revendications 1 à 7, caractérisé en ce que la partie du réservoir conduisant au tube pour décharge dans un gaz est maintenue à une température qui est identique ou supérieure à la température de paroi du tube pour décharge dans un gaz.

9. Procédé selon l'une des revendications 1 à 8, caractérisé en ce que la pression partielle du matériau de décharge vaporisé varie en fonction de la température du réservoir.

10. Procédé selon la revendication 9, caractérisé en ce que la température du réservoir est abaissée de sorte que la pression partielle du matériau gazeux de décharge vaporisé diminue.

11. Procédé selon l'une des revendications 2 à 10, caractérisé en ce que la puissance électrique de service lors de l'opération de diffusion par cuisson est d'environ 25% à 50% supérieure à la puissance en service permanent recherchée.

12. Tube pour décharge dans un gaz du procédé selon la revendication 1, comportant un matériau gazeux de décharge qui forme un gaz de décharge dans des conditions de service, caractérisé en ce que le matériau gazeux de décharge est incorporé dans la paroi intérieure du tube pour décharge dans un gaz (12), et qu'aucun matériau gazeux de décharge condensé ne se trouve plus dans le tube pour décharge dans un gaz.

13. Tube pour décharge dans un gaz selon la revendication 12, caractérisé en ce que le matériau gazeux de décharge est un métal alcalin ou du mercure.

14. Tube pour décharge dans un gaz selon l'une des revendications 12 à 13, caractérisé en ce qu'une couche de fluorescence est prévue sur la surface intérieure du tube pour décharge dans un gaz (12).

15. Tube pour décharge dans un gaz selon la revendication 14, caractérisé en ce que le matériau gazeux de décharge est conservé totalement ou partiellement dans la couche de fluorescence située sur la paroi intérieure du tube pour décharge dans un gaz.
